# EUROPÄISCHE PATENTSCHRIFT

(11) **EP 2 095 003 B1**
(45) Veröffentlichungstag und Bekanntmachung des Hinweises auf die Patenterteilung: **24.02.2010**
(21) Anmeldenummer: 07821624.9
(22) Anmeldetag: 22.10.2007
(51) Int. Cl.: F16L 41/08, F16L 39/00

(54) **BLOCKVERBINDER FÜR FLUIDLEITUNGEN**
BLOCK CONNECTOR FOR FLUID CONDUITS
BLOC DE RACCORDEMENT POUR CONDUITES DE FLUIDE

(30) Priorität: 28.12.2006 DE 202006019525 U
(43) Veröffentlichungstag der Anmeldung: 02.09.2009
(73) Patentinhaber: Voss Automotive GmbH, 51688 Wipperfürth (DE)
(72) Erfinder: LECHNER, Martin, 51789 Lindlar (DE)
(74) Vertreter: Patentanwälte Dr. Solf & Zapf
(86) Internationale Anmeldenummer: PCT/EP2007/061260
(87) Internationale Veröffentlichungsnummer: WO 2008/080646

(56) Entgegenhaltungen:
- EP-A2- 0 814 295
- WO-A-03/012332
- US-A- 5 163 716

## Beschreibung

Die vorliegende Erfindung betrifft einen sogenannten Blockverbinder der im Oberbegriff des Anspruchs 1 definierten Art.

Ein derartiger Blockverbinder ist in der GB 2 382 391 A beschrieben. Die Verbinderteile greifen zur Fluidverbindung über eine Steckverbindung längs einer Steckachse ineinander ein, wobei an den Verbinderteilen jeweils eine Rohrleitung befestigt ist. Jede Rohrleitung wird in eine Aufnahme des jeweiligen Verbinderteils eingesteckt und verlötet oder verschweißt. Die zur Steckachse parallel versetzte Verschraubung besteht aus einer Stiftschraube, die einendig in einer Gewindebohrung des einen Verbinderteils sitzt. Das andere Verbinderteil wird mit einem Durchgangsloch auf das andere, vorstehende Ende der Stiftschraube aufgesetzt und mit einer Schraubmutter befestigt.

Die GB 2 390 126 A beschreibt weitere Arten solcher Blockverbinder, wobei zwei Rohrleitungen über angeformte Steckverbinderabschnitte direkt zusammengesteckt werden. Zur Befestigung sind zwei flanschartige Verbinderplatten vorgesehen, die einerseits mit Halteöffnungen die Steckenden der Rohrleitungen übergreifen und andererseits in seitlichen Verbindungsabschnitten verschraubt sind. In einer weiteren Ausführung wird eine Rohrleitung mit einem Einsteckende in eine Anschlussöffnung eines Bauteils eingesteckt und mit einer flanschartigen Verbinderplatte über eine seitliche Verschraubung befestigt. Solche Ausführungen sind zudem auch in der WO 2005/012781 A1 und der EP0814295 beschrieben.

Bei solchen bekannten Blockverbindern tritt in der Praxis häufig das Problem auf, dass sich die beiden Verbinderteile beim Lösen der Verschraubung zunächst nicht voneinander trennen lassen, was verschiedene Gründe haben kann, wie vor allem ein "Verkleben" im Dichtungsbereich. Dies birgt die Gefahr, dass die Verbinderteile, die häufig noch unter einem bestimmten Fluid-Druck stehen, erst nach vollständigem Lösen der Verschraubung sich sehr plötzlich, explosionsartig voneinander trennen, was eventuell sogar zu einer Gefährdung von Personen führt, weil die Teile druckbedingt geschossartig durch den Raum fliegen können.

Der Erfindung liegt die Aufgabe zu Grunde, einen Blockverbinder der beschriebenen Art zu schaffen, der zur Vermeidung der beschriebenen Nachteile eine erhöhte Sicherheit beim Lösen der Verbinderteile gewährleistet.

Erfindungsgemäß wird dies durch die Merkmale des unabhängigen Anspruchs 1 erreicht. Vorteilhafte Ausgestaltungen der Erfindung sind Gegenstand der abhängigen Ansprüche.

Demnach ist erfindungsgemäß die Verschraubung mit Zwangsmitnahmemitteln derart ausgestattet, dass - ausgehend von der eingesteckten Betriebsstellung - ein Lösen der Verschraubung eine zwangsweise, kontrollierte Trennbewegung der Verbinderteile - insbesondere zumindest bis zur Aufhebung der umfangsgemäßen Abdichtung zwischen dem Steckerschaft und der Steckaufnahme - bewirkt. Dazu ist die Verschraubung bezüglich ihrer effektiven Gewinde-Eingriffslänge derart in Anpassung an die axiale Anordnung einer Dichtungsanordnung des Steckerschaftes bemessen, dass die Verschraubung beim Lösen erst dann gänzlich getrennt wird, nachdem bereits die umfangsgemäße Abdichtung des Steckerschaftes innerhalb der Steckaufnahme aufgehoben ist. Durch diese vorteilhafte Ausgestaltung ist ein kontrolliertes Ablassen eines eventuellen Fluid-Restdruckes möglich, ohne dass die Verbinderteile durch den Restdruck plötzlich, explosionsartig getrennt werden könnten, weil sie noch über die Verschraubung gegen vollständiges Lösen zusammengehalten werden. Die Verbinderteile können dann im drucklosen Zustand sehr sicher ganz voneinander getrennt werden.

Anhand von bevorzugten, in der beiliegenden Zeichnung veranschaulichten Ausführungsbeispielen soll im Folgenden die Erfindung genauer erläutert werden. Dabei zeigen:
- Fig. 1: eine erste Ausführungsform eines erfindungsgemäßen Blockverbinders im Axialschnitt bezogen auf eine Steckachse und eine Verschraubungsachse,
- Fig. 2: eine Teilansicht aus Fig. 1 im Bereich der Verschraubung in einer Ausführungsvariante,
- Fig. 3: eine weitere Ausführungsvariante in einer Ansicht wie in Fig. 2,
- Fig. 4: eine Detaildarstellung einer Verschraubung in einer Abwandlung gegenüber Fig. 3 und
- Fig. 5: eine weitere Ausführungsvariante in einer Ansicht ähnlich Fig. 2 bzw. 3.

In den verschiedenen Figuren der Zeichnung sind gleiche Teile stets mit den gleichen Bezugszeichen versehen. Jede eventuell nur einmal unter Bezugnahme auf nur eine oder einen Teil der Zeichnungsfiguren vorkommende Beschreibung eines Teils gilt daher analog auch bezüglich der anderen Zeichnungsfiguren, in denen dieses Teil mit dem entsprechenden Bezugzeichen ebenfalls zu erkennen ist.

Ein erfindungsgemäßer Blockverbinder 1 dient in den dargestellten Beispielen zum Verbinden von (mindestens) zwei Fluidleitungen 2, und zwar in bevorzugter Anwendung zum Verbinden von CO₂ -Leitungen in Klimaanlagen, wie sie z.B. in Kraftfahrzeugen eingesetzt werden. Der Blockverbinder 1 besteht aus einem ersten Verbinderteil 4, das mit mindestens einem Steckerschaft 6 in mindestens eine Steckaufnahme 8 eines zweiten Verbinderteils 10 einsteckbar ist. Der Steckerschaft 6 ist innerhalb der Steckaufnahme 8 umfangsgemäß über eine Dichtungsanordnung 12 abgedichtet, die insbesondere für den bevorzugten Anwendungsfall als Gasdichtung aus (mindestens) zwei axial beabstandeten Umfangsdichtungen 12a und 12b besteht, die bevorzugt auf dem Steckerschaft 6 angeordnet sind. Beispielsweise handelt es sich jeweils um einen in einer Stecker-Ringnut angeordneten O-Ring oder um einen stoffschlüssig, z. B. in einem Zweikomponenten-Kunststoff-Spritzvorgang (2K-Verfahren) angeformten Dichtring. Durch die Ausgestaltung der Dichtungsanordnung 12 als Radialdichtung(en) kann vorteilhafterweise auf zusätzliche Passmittel (z. B. Passstifte) zur gegenseitigen Positionierung der Verbinderteile 4, 10 verzichtet werden. Jede Fluidleitung 2 ist mit dem jeweiligen Verbinderteil 4 bzw. 10, und zwar bevorzugt mit einem kurzen Rohransatz 14, insbesondere verlötet oder verschweißt, wobei jeweils die Leitung 2 und der Rohransatz 14 mit ihren kongruenten Stirnringflächen stumpf aneinander liegen. Es kann auch eine Verschraubung der jeweiligen Leitung vorgesehen sein.

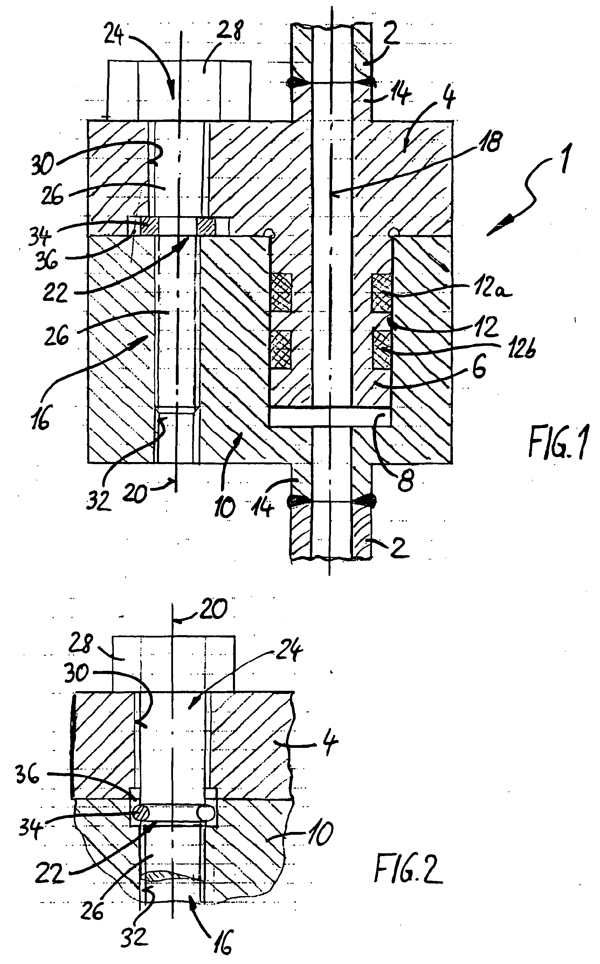

Zur gegenseitigen Arretierung der Verbinderteile 4 und 10 in ihrer eingesteckten Betriebsstellung, wie sie in Fig. 1 dargestellt ist, ist eine Verschraubung 16 mit einer zur Steckachse 18 des Steckerschaftes 6 und der Steckaufnahme 8 seitlich parallel versetzten Verschraubungsachse 20 vorgesehen.

Erfindungsgemäß ist die Verschraubung 16 mit Zwangsmitnahmemitteln 22 derart ausgestattet, dass - ausgehend von der Betriebsstellung gemäß Fig. 1 - ein Lösen der Verschraubung 16 eine zwangsweise, kontrollierte Trennbewegung der Verbinderteile 4 und 10 bewirkt, so dass der Steckerschaft 6 aus der Steckaufnahme 8 langsam und kontrolliert herausgezogen wird, und zwar zumindest bis zur Aufhebung der umfangsgemäßen Abdichtung zwischen dem Steckerschaft 6 und der Steckaufnahme 8. Auf diese Weise kann ein eventuell innerhalb der Leitungen 2 noch vorhandener Fluid-Restdruck langsam und kontrolliert abgelassen werden. Hierzu ist die Verschraubung 16 bezüglich ihrer effektiven Gewinde-Eingriffslänge derart in Anpassung an die axiale Anordnung der Dichtungsanordnung 12 bzw. der Dichtungen 12a,b bemessen, dass die Verschraubung 16 beim Lösen erst dann gänzlich getrennt wird, nachdem bereits die umfangsgemäße Abdichtung des Steckerschaftes 6 innerhalb der Steckaufnahme 8 aufgehoben ist. Vorzugsweise besteht die Verschraubung 16 aus einer Kopfschraube 24, die ihrerseits aus einem Schraubenschaft 26 und einem Schraubenkopf 28 besteht. In den dargestellten Ausführungsbeispielen greift die Kopfschraube 24 mit dem Schraubenschaft 26 durch ein Durchgangsloch 30 des ersten Verbinderteils 4 hindurch in eine Gewindebohrung 32 des zweiten Verbinderteils 10 ein. Alternativ dazu kann die Kopfschraube 24 aber auch umgekehrt angeordnet sein. Als Zwangsmitnahmemittel 22 ist ein zwischen der Kopfschraube 24 und dem einen, das Durchgangsloch 30 aufweisenden Verbinderteil 4 wirkendes Mitnehmerelement 34 vorgesehen. Es ist vorteilhaft, wenn das Mitnehmerelement 34 als Rastelement derart ausgebildet ist, dass die Kopfschraube 24 nach einer ersten Montage durch Einführen durch oder in das Durchgangsloch 30 selbsttätig über das Mitnehmerelement 34 formschlüssig oder kraftformschlüssig mit dem Verbinderteil 4 verrastet wird, so dass bei einem späteren Lösen der Kopfschraube 24 durch Herausschrauben des Schraubenschaftes 26 aus der Gewindebohrung 32 das Verbinderteil 4 von der Schraube 24 mitgenommen und dadurch von dem anderen Verbinderteil 10 zwangsweise getrennt wird. Für die Ausgestaltung und Anordnung des Mitnehmerelementes 34 gibt es verschiedene Möglichkeiten, von denen einige in den einzelnen Zeichnungsfiguren beispielhaft dargestellt sind.

In den Ausführungsbeispielen gemäß Fig. 1 und 2 ist das Mitnehmerelement 34 jeweils als ein radial elastischer Federring in einer zur Verschraubungsachse 20 konzentrischen, zwischen den Verbinderteilen 4,10 gebildeten Ringkammer 36 angeordnet. Dieser Federring hintergreift nach der ersten Montage der Kopfschraube 24 rastend eine radiale, beispielsweise durch eine Ringnut gebildete Haltekante des Schraubenschaftes 26. Der als Mitnehmerelement 34 vorgesehene Federring kann gemäß Fig. 1 einen rechteckigen oder gemäß Fig. 2 als Drahtfederring einen kreisförmigen Ringquerschnitt aufweisen.

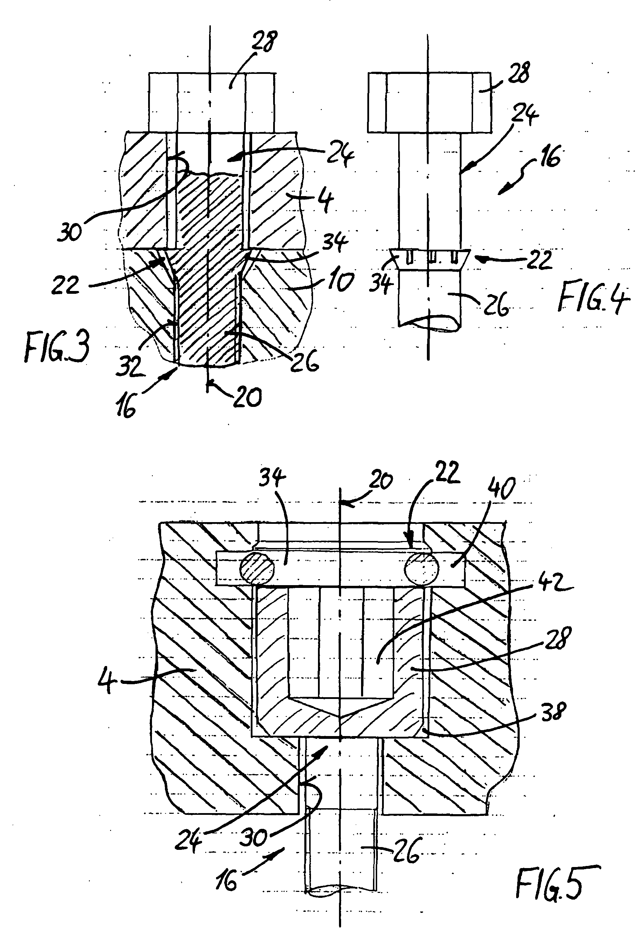

Bei den weiteren Beispielen gemäß Fig. 3 und 4 ist als Mitnehmerelement 34 an dem Schraubenschaft 26 der Kopfschraube 24 ein im Längsschnitt gesehen widerhakenartiges Ringelement angeordnet, welches bei der Montage durch das Durchgangsloch 30 hindurch bewegbar ist und nachfolgend eine radiale Haltestufe des Verbinderteils 4 rastend hintergreift. Gemäß Fig. 3 kann das Ringelement einstückiger Bestandteil des Schraubenschaftes sein. Bei der Ausführung gemäß Fig. 4 ist das Ringelement als gesondertes, beispielsweise aus Federblech geformtes Teil auf dem Schraubenschaft 26 insbesondere in einer Ringnut gehalten. Anstatt des umfangsgemäßen Ringelementes können auch einzelne, über den Umfang verteilte Widerhakenelemente vorgesehen sein.

In dem letzten Ausführungsbeispiel gemäß Fig. 5 ist das Verbinderteil 4 im Bereich des Durchgangsloches 30 mit einer Locherweiterung 38 zur versenkten Aufnahme des Schraubenkopfes 28 ausgebildet. Das Mitnehmerelement 34 ist im mündungsnahen Bereich der Locherweiterung 38 in Form eines in einer radialen Ringnut 40 gelagerten, radial elastischen Federrings derart angeordnet, dass bei der Montage der Kopfschraube 24 der Schraubenkopf 28 unter elastischer Aufweitung des Federrings axial hindurchführbar ist, bis der Federring den Schraubenkopf 28 radial nach innen und axial rastend übergreift. In diesem Fall weist der Schraubenkopf 28 einen Innenkraftangriff 42 beispielsweise in einer Ausgestaltung als Innensechskant, Innenstern (sog. TORX) oder dergleichen auf.

Es ist zu bemerken, dass eines der beiden Verbinderteile 4 oder 10 auch Bestandteil eines beliebigen Aggregates sein kann, so dass auf dieser Seite keine "Leitung" (Schlauch- oder Rohrleitung) vorgesehen ist.

Die Erfindung ist ohnehin nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die in dem/jedem unabhängigen Anspruch definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für eine Erfindung zu verstehen.

## Patentansprüche

1. Blockverbinder (1) für mindestens eine Fluidleitung (2), insbesondere für CO₂-Verbindungen in Klimaanlagen, bestehend aus einem ersten Verbinderteil (4), das mit mindestens einem Steckerschaft (6) umfangsgemäße abgedichtet in mindestens eine Steckaufnahme (8) eines zweiten Verbinderteils (10) einsteckbar ist, wobei zur gegenseitigen Arretierung der Verbinderteile (4,10) in ihrer eingesteckten Betriebsstellung eine Verschraubung (16) mit einer zur Steckachse (18) des Steckerschaftes (6) und der Steckaufnahme (8) seitlich parallel versetzten Verschraubungsachse (20) vorgesehen ist,
**dadurch gekennzeichnet, dass** die Verschraubung (16) derart ausgebildet ist, dass - ausgehend von der eingesteckten und verschraubten Betriebsstellung - ein Lösen der Verschraubung (16) eine zwangsweise Trennbewegung der Verbinderteile (4,10) bewirkt.

2. Blockverbinder nach Anspruch 1,
**dadurch gekennzeichnet, dass** die Verschraubung (16) mit Zwangsmitnahmemitteln (22) ausgestattet ist.

3. Blockverbinder nach Anspruch 1 oder 2,
**dadurch gekennzeichnet, dass** die von der Verschraubung (16) bewirkte Trennbewegung zumindest bis zur Aufhebung der umfangsgemäßen Abdichtung zwischen dem Steckerschaft (6) und der Steckaufnahme (8) erfolgt, wozu bevorzugt die Verschraubung (16) bezüglich ihrer effektiven Gewinde-Eingriffslänge derart in Anpassung an eine Dichtungsanordnung (12) des Steckerschaftes (6) bemessen ist, dass die Verschraubung (16) beim Lösen erst dann gänzlich getrennt wird, nachdem bereits die umfangsgemäße Abdichtung des Steckerschaftes (6) innerhalb der Steckaufnahme (8) aufgehoben ist.

4. Blockverbinder nach einem der Ansprüche 1 bis 3,
**dadurch gekennzeichnet, dass** die Verschraubung (16) aus einer Kopfschraube (24) besteht, die mit einem Schraubenschaft (26) durch ein Durchgangsloch (30) des einen Verbinderteils (4 oder 10) hindurch in eine Gewindebohrung (32) des anderen Verbinderteils (10 oder 4) eingreift, wobei als Zwangsmitnahmemittel (22) ein zwischen der Kopfschraube (24) und dem einen Verbinderteil (4/10) wirkendes Mitnehmerelement (34) vorgesehen ist.

5. Blockverbinder nach Anspruch 4,
**dadurch gekennzeichnet, dass** das Mitnehmerelement (34) als Rastelement derart ausgebildet ist, dass die Kopfschraube (24) nach einer ersten Montage durch Einführen durch oder in das Durchgangsloch (30) selbsttätig über das Mitnehmerelement (34) durch Verrasten mit dem einen Verbinderteil (4) verbunden wird.

6. Blockverbinder nach Anspruch 4 oder 5,
**dadurch gekennzeichnet, dass** als Mitnehmerelement (34) ein radial elastischer Federring in einer zur Verschraubungsachse (20) konzentrischen, zwischen den Verbinderteilen (4,10) gebildeten Ringkammer (36) angeordnet ist, wobei der Federring nach der ersten Montage der Kopfschraube (24) eine radiale Haltekante des Schraubenschaftes (26) rastend hintergreift.

7. Blockverbinder nach Anspruch 4 oder 5,
**dadurch gekennzeichnet, dass** als Mitnehmerelement (34) an der Kopfschraube (24) mindestens ein widerhakenartig wirkendes Element angeordnet ist, welches bei der Montage eine radiale Haltestufe des einen Verbinderteils (4) rastend hintergreift.

8. Blockverbinder nach Anspruch 4 oder 5,
**dadurch gekennzeichnet, dass** das eine Verbinderteil (4) im Bereich des Durchgangsloches (30) eine Locherweiterung (38) zur versenkten Aufnahme eines Schraubenkopfes (28) der Kopfschraube (24) aufweist, wobei das Mitnehmerelement (34) im mündungsnahen Bereich der Locherweiterung (38) in Form eines in einer radialen Ringnut (40) gelagerten, radial elastischen Federrings derart angeordnet ist, dass bei der Montage der Kopfschraube (24) der Kopf (28) unter elastischer Aufweitung des Federrings axial hindurchführbar ist, bis der Federring den Schraubenkopf (28) radial nach innen und axial rastend übergreift.

## Claims

1. A block connector (1) for at least one fluid line (20), in particular for CO₂ connections in air-conditioning units, consisting of a first connector part (4) pluggable in a peripherally sealed manner into at least one plug-in socket (8) of a second connector part (10) by means of at least one plug shaft (6), wherein for mutual locking of the connector parts (4, 10) in their plugged-in operating position, a screw connection (16) with a screwing axis (20) displaced laterally in a parallel manner with respect to the plug-in axis (18) of the plug shaft (6) and the plug-in socket (8) is provided, **characterised in that** the screw connection (16) is such that - starting from the plugged-in and screwed-together operating position - unscrewing of the screw connection (16) brings about an enforced separating motion of the connector parts (4, 10).

2. A block connector according to claim 1, **characterised in that** the screw connection (16) is equipped with enforced-entrainment means (22).

3. A block connector according to claim 1 or 2, **characterised in that** the separating motion brought about by the screw connection (16) takes place at least until the peripheral sealing between the plug shaft (6) and the plug-in socket (8) is discontinued, for which the screw connection (16) is, as regards its effective thread engagement length, preferably dimensioned in conformity with a sealing arrangement (12) of the plug shaft (6) in such a manner that upon unscrewing of the screw connection (16), the latter is only totally separated after the peripheral sealing of the plug shaft (6) within the plug-in socket (8) has already been discontinued.

4. A block connector according to any one of claims 1 to 3, **characterised in that** the screw connection (16) consists of a headed screw (24) which by means of a screw shank (26) engages through a through hole (30) of one connector part (4 or 10) into a tapped bore (32) of the other connector part (10 or 4), wherein an entraining element (34) acting between the headed screw (24) and one connector part (4/10) is provided as an enforced-entrainment means (22).

5. A block connector according to claim 4, **characterised in that** the entraining element (34) is in the form of a locking element in such a manner that the headed screw (24) is, after a first fitting by insertion through or into the through hole (30), automatically connected via the entraining element (34) to one connector part (4) through locking.

6. A block connector according to claim 4 or 5, **characterised in that** a radially resilient spring ring is arranged in an annular chamber (36), concentric to the screwing axis (20) and formed between the connector parts (4, 10), as an entraining element (34), wherein after the first fitting of the headed screw (24), the spring ring engages behind a radial holding edge of the screw shank (26) in a locking manner.

7. A block connector according to claim 4 or 5, **characterised in that** at least one element acting in a barb-like manner is arranged on the headed screw (24) as an entraining element (34), which element engages behind a radial holding step of one connector part (4) in a locking manner upon fitting.

8. A block connector according to claim 4 or 5, **characterised in that** one connector part (4) has, in the region of the through hole (30), a hole enlargement (38) to receive a screw head (28) of the headed screw (24) in a countersunk manner, wherein the entraining element (34) is, in the form of a radially resilient spring ring mounted in a radial annular groove (40), arranged in the region of the hole enlargement (38) close to the mouth in such a manner that upon fitting of the headed screw (24), the head (28) can, accompanied by resilient enlargement of the spring ring, be guided through in an axial manner until the spring ring engages over the screw head (28) so as to lock it radially inwards and axially.

## Revendications

1. Bloc de raccordement (1) pour au moins une conduite de fluide (2), en particulier pour des liaisons de CO₂ dans des climatiseurs, formé par un premier élément de raccordement (4) qui peut être enfiché avec au moins une tige de raccord (6), étanchée sur le pourtour, dans au moins un logement de raccord (8) d'un deuxième élément de raccordement (10), moyennant quoi, pour le blocage réciproque des éléments de raccordement (4, 10) dans une position de service enfichée, un assemblage par vissage est prévu (16) avec un axe de vissage (20) décalé parallèlement sur le côté par rapport à l'axe d'enfichage (18) de la tige de raccord (6) et du logement de raccord (8),
**caractérisé en ce que** l'assemblage vissé (16) est réalisé de telle sorte que - à partir de la position de service enfichée et vissée - un desserrage de l'assemblage vissé (16) induit un mouvement de séparation forcé des éléments de raccordement (4, 10).

2. Bloc de raccordement selon la revendication 1, **caractérisé en ce que** l'assemblage vissé (16) est muni de moyens d'entraînement forcé (22).

3. Bloc de raccordement selon la revendication 1 ou 2, **caractérisé en ce que** le mouvement de séparation induit par l'assemblage vissé (16) s'effectue au moins jusqu'à la suppression de l'étanchéité périphérique entre la tige de raccord (6) et le logement de raccord (8), c'est pourquoi l'assemblage vissé (16) est dimensionné dans sa longueur effective d'engagement du filetage en ajustement avec une garniture d'étanchéité (12) de la tige de raccord (6), de telle sorte que l'assemblage vissé (16) lors du desserrage est seulement séparé totalement lorsque l'étanchéité périphérique de la tige de raccord (6) est déjà supprimée à l'intérieur du logement de raccord (8).

4. Bloc de raccordement selon l'une quelconque des revendications 1 à 3, **caractérisé en ce que** l'assemblage vissé (16) est formé par une vis à tête (24), qui s'engage avec une tige (26) à travers un trou débouchant (30) de l'un des éléments de raccordement (4 ou 10) dans une forure taraudée (32) de l'autre élément de raccordement (10 ou 4), le moyen d'entraînement forcé (22) prévu étant un élément d'entraînement (34) agissant entre la vis à tête (24) et l'un des éléments de raccordement (4 ou 10).

5. Bloc de raccordement selon la revendication 4, **caractérisé en ce que** l'élément d'entraînement (34) est réalisé sous forme d'élément d'arrêt, de telle sorte que la vis à tête (24), après un premier montage par introduction à travers ou dans le trou débouchant (30), est reliée automatiquement, par l'intermédiaire de l'élément d'entraînement (34), par blocage avec l'un des éléments de raccordement (4).

6. Bloc de raccordement selon la revendication 4 ou 5, **caractérisé en ce que** pour former l'élément d'entraînement forcé (34), une bague à ressort radialement élastique est disposée dans une chambre annulaire (36) concentrique par rapport à l'axe de vissage (20) et formée entre les éléments de raccordement (4, 10), moyennant quoi que, après le premier montage de la vis à tête (24), ladite bague à ressort s'engage en étant bloqué derrière un bord d'arrêt radial de la tige de raccord (26).

7. Bloc de raccordement selon la revendication 4 ou 5, **caractérisé en ce que** pour former l'élément d'entraînement forcé (34), au moins un élément agissant à la manière d'un ardillon est disposé sur la vis à tête (24), lequel, lors du montage, s'engage en étant bloqué derrière un épaulement d'arrêt radial de l'un des éléments de raccordement (4).

8. Bloc de raccordement selon la revendication 4 ou 5, **caractérisé en ce que** l'un des éléments de raccordement (4), dans la zone du trou débouchant (30), comporte un élargissement de trou (38) pour recevoir sous forme noyée une tête (28) de la vis à tête (24), l'élément d'entraînement (34) étant disposé dans la zone, proche de l'embouchure, de l'élargissement de trou (38) sous la forme d'une bague à ressort radialement élastique, logée dans une rainure annulaire (40) radiale, de telle sorte que, au moment du montage de la vis à tête (24), la tête (28) est guidée axialement à travers ladite zone sous l'effet de l'élargissement de la bague à ressort, jusqu'à ce que la bague à ressort se soit engagée au-dessus de la tête de vis (28) radialement vers l'intérieur et de manière bloquée axialement.
